# EUROPEAN PATENT APPLICATION

(11) **EP 3 358 783 A1**
(43) Date of publication of application: **08.08.2018**
(21) Application number: 16852045.0
(22) Date of filing: 28.09.2016
(51) Int. Cl.: H04L 9/32, H04L 9/08

(54) **INTEGRATED AUTHENTICATION SYSTEM FOR AUTHENTICATION USING SINGLE-USE RANDOM NUMBERS**

(30) Priority: 02.10.2015 KR 20150139016
(71) Applicant: Korea Framing Institute, Seocho-gu Seoul 06731 (KR)
(72) Inventor: HWANG, Soon Young, Seoul 01775 (KR)
(74) Representative: Cabinet Chaillot
(86) International application number: PCT/KR2016/010860
(87) International publication number: WO 2017/057899

(57) **Abstract**

In an integrated authentication system for authentication using single-use random numbers according to the present invention, a single-use random number generator extracts the random numbers of locations corresponding to a seed value received by a user terminal and a user password from random numbers constituting a first random number set by using the seed value and the user password as location information, and then generates and displays a first single-use random number, and an authentication server extracts the random numbers of locations corresponding to the seed value and a user password stored in a password database (DB) from random numbers constituting a second random number set by using the seed value and the user password as location information, generates a second single-use random number, and then authenticates the user based on whether the second single-use random number matches the first single-use random number received from the user terminal.

## Description

### Technical Field

The present invention relates to an integrated authentication system for authentication using single-use random numbers. More specifically, the present invention relates to a method which can prevent a transaction password from being divulged even when a user terminal or server is hacked into by a third party without legitimate rights, which can preclude a third party from reusing a transaction password by dynamically changing the transaction password upon each request for user authentication, and which can prevent a third party from predicting a transaction password in advance, thereby considerably enhancing the security of user authentication.

### Background Art

In general, when a user accesses a webpage providing a specific service via a user terminal, he or she requests user authentication from a server by inputting his or her ID and password. In this case, the server determines whether to allow the access or not by checking whether the input ID and password match the previously registered ID and password of the user. Meanwhile, if a third party requests authentication by inputting the ID and password of the user in the state in which the ID and password of the user have been divulged to the third party, the server cannot check whether the third party is a user with legitimate rights, and thus access is authenticated based on only whether one ID and one password match another ID and another password, with the result that the problem of false authentication occurs.

The problem of false authentication widely appears currently due to Internet hacking, and the stealing of the information of an Internet user attributable to the problem of false authentication is serious.

In other words, according to the conventional method, a password is fixed as long as the password is not changed by a user. Accordingly, when a third party hacks into a computer of a user or the like or becomes aware of the password of the user, stored in a server, through hacking, a problem arises in that the third party may pretend to be the user without legitimate rights by reusing the number.

In order to overcome the problem of the above fixed password method, a one-time password (OTP) generator which generates a number varying each time is being used.

However, the conventional OTP method generates a password by using a specific rule (algorithm) called a one-way hash function. Accordingly, when this rule (algorithm) is divulged to a third party without legitimate rights, numbers used as a password can be predicted, and thus the same problem arises in that the stealing of a password may occur.

### [Prior Art Documents]

### [Patent Documents]

(Patent document 1) Korean Patent Application Publication No. 10-2008-0086733 (published on September 26, 2008, and entitled Financial Transaction System Using OTPs)
(Patent document 2) Korean Patent Application Publication No. 10-2014-0106360 (published on September 3, 2014, and entitled OTP Authentication System and Method)

### Disclosure

### Technical Problem

An object of the present invention is to prevent a transaction password from being divulged even when a user terminal or server is hacked into by a third party without legitimate rights, thereby considerably improving the security of user authentication.

Another object of the present invention is to preclude a third party from reusing a transaction password by dynamically changing the transaction password upon each request for user authentication and prevent the third party from predicting the transaction password in advance, thereby considerably enhancing the security of user authentication.

A further object of the present invention is to prevent a transaction password from being generated before a user accesses the server, thereby preventing even a server operator from stealing a transaction password and also reducing internal control cost in terms of a server operator.

### Technical Solution

According to an aspect of the present invention, there is provided an integrated authentication system including a user terminal, an authentication server, and a single-use random number generator, wherein: the authentication server which has received a request for the authentication of a user from the user terminal generates a seed value, and transmits the seed value to the user terminal; the single-use random number generator extracts the random numbers of locations corresponding to the seed value received by the user terminal and a user password from random numbers constituting a first random number set stored in the single-use random number generator by using the seed value and the user password as location information, and then generates and displays a first single-use random number; and the authentication server extracts the random numbers of locations corresponding to the seed value and a user password stored in a password database (DB) from random numbers constituting a second random number set stored in a random number set DB by using the seed value and the user password stored in the password DB as location information, generates a second single-use random number, and then authenticates the user based on whether the second single-use random number matches the first single-use random number received from the user terminal.

According to another aspect of the present invention, there is provided an integrated authentication system including a user terminal, an authentication server, and a single-use random number generator, wherein: the authentication server which has received a request for the authentication of a user from the user terminal generates a concealed number set including a seed value, and transmits the concealed number set including the seed value to the user terminal; the single-use random number generator extracts the random numbers of locations corresponding to the seed value acquired from the concealed number set and a user password from random numbers constituting a first random number set stored in the single-use random number generator by using the seed value and the user password as location information, and then generates and displays a first single-use random number; and the authentication server extracts the random numbers of locations corresponding to the seed value and a user password stored in a password database (DB) from random numbers constituting a second random number set stored in a random number set DB by using the seed value and the user password stored in the password DB as location information, generates a second single-use random number, and then authenticates the user based on whether the second single-use random number matches the first single-use random number received from the user terminal.

In the integrated authentication system according to the other aspect of the present invention, the seed value may be acquired by extracting numbers corresponding to seed extraction location numbers already allocated to the user from numbers constituting the concealed number set.

In the integrated authentication system according to both the aspects of the present invention, the single-use random number generator may generate the first single-use random number by generating a first intermediate value through the application of a first operation rule to the seed value and the user password, extracting first location numbers through the application of a first extraction rule to the first intermediate value, and then extracting random numbers corresponding to the first location numbers from the random numbers constituting the first random number set; and the authentication server may generate the second single-use random number by generating a second intermediate value through the application of a second operation rule to the seed value and the user password stored in the password DB, extracting second location numbers through the application of a second extraction rule to the second intermediate value, and then extracting random numbers corresponding to the second location numbers from the random numbers constituting the second random number set.

In the integrated authentication system according to both the aspects of the present invention, the single-use random number generator and the authentication server may generate the first single-use random number and the second single-use random number, respectively, by additionally using transaction information including part or all of transfer amount information, recipient identification information, and transaction time information.

In the integrated authentication system according to both the aspects of the present invention, the single-use random number generator and the authentication server may generate the first single-use random number and the second single-use random number, respectively, by additionally using the bio-information of the user.

In the integrated authentication system according to both the aspects of the present invention, the single-use random number generator may generate the first single-use random number by extracting the random numbers of locations corresponding to the seed value and the user password from the random numbers constituting the first random number set and then applying the first transformation rule to the extracted random numbers; and the authentication server may generate the second single-use random number by extracting the random numbers of locations corresponding to the seed value and the user password stored in the password DB from the random numbers constituting the second random number set and then applying a second transformation rule to the extracted random numbers.

In the integrated authentication system according to both the aspects of the present invention, the single-use random number generator and the authentication server may generate the first single-use random number and the second single-use random number, respectively, by additionally using transaction information including part or all of transfer amount information, recipient identification information, and transaction time information.

In the integrated authentication system according to both the aspects of the present invention, the single-use random number generator and the authentication server generate the first single-use random number and the second single-use random number, respectively, by additionally using the bio-information of the user.

In the integrated authentication system according to both the aspects of the present invention, the single-use random number generator may generate the first single-use random number by extracting the random numbers of locations corresponding to the seed value and the user password from the random numbers constituting the first random number set and then encrypting the extracted random numbers with a first hash function; and the authentication server may generate the second single-use random number by extracting the random numbers of locations corresponding to the seed value and the user password stored in the password DB from the random numbers constituting the second random number set and encrypting the extracted random numbers with a second hash function.

In the integrated authentication system according to both the aspects of the present invention, the single-use random number generator may be a hardware device physically separated from the user terminal or a function module implemented in the user terminal in a software form.

In the integrated authentication system according to both the aspects of the present invention, the single-use random number generator does not store the user password.

### Advantageous Effects

According to the present invention, a transaction password can be prevented from being divulged even when the user terminal or server is hacked into by a third party without legitimate rights, so that an effect is achieved in that the security of user authentication is considerably improved.

Furthermore, a third party is precluded from reusing a transaction password by dynamically changing the transaction password upon each request for user authentication and the third party is prevented from predicting the transaction password in advance, so that an effect is achieved in that the security of user authentication is considerably enhanced.

Furthermore, a transaction password is not generated before a user accesses the server, so that effects are achieved in that even a server operator cannot steal a transaction password and internal control cost is reduced in terms of a server operator.

Furthermore, according to the present invention, a user uses a single-use random number generated by the single-use random number generator as a transaction password in order to obtain authentication, so that an effect is achieved in that the transaction password cannot be stolen even when a third party without legitimate rights tabs on a line or hacks.

Furthermore, even when a third party without legitimate rights acquires and uses the single-use random number generator, the third party cannot become aware of a user password, and thus the single-use random number generator acquired by the third party cannot generate the same random number matching a random number generated by the authentication server, so that an effect is achieved in that a transaction password is not stolen even when the single-use random number generator is lost.

Furthermore, a user password and a second random number set corresponding to a user private key are not stored in the authentication server, but are separately stored in the password DB and the random number set DB, respectively, so that an effect is achieved in that a transaction password is not stolen even when the authentication server is hacked into.

Furthermore, a random number generated by the single-use random number generator includes transaction information including part or all of transfer amount information, recipient identification information, and transaction time information, so that a non-repudiation effect is achieved. In other words, an authentication server (a financial institution or the like) which has transmitted a seed value cannot repudiate the performance of a transaction, and a user who has transmitted a number, obtained by inputting the seed value and his or her user password, to the authentication server cannot repudiate the performance of the acts. Furthermore, a random number generated by the single-use random number generator includes recipient identification information, so that an effect is achieved in that the authentication of a hacker is rejected due to different pieces of recipient identification information even when the hacker illegitimately intercepts the single-use random number generator and asks for a transfer to the number of his or her illegitimate account.

Furthermore, a user password is required to use the single-use random number generator, the user password is stored only in the memory (brain) of a user and is not present anywhere else, and thus a third party has no method of stealing the user password, so that the single-use random number generator can effectively replace an accredited certificate.

Moreover, in a specific transaction, the present invention can authenticate whether a trader is a legitimate user and can be also used for the purpose of identification capable of generally identifying a user, so that an effect is achieved in that the integrated authentication of a user becomes possible.

### Description of Drawings

FIG. 1 is a diagram showing an integrated authentication system according to a first embodiment of the present invention;
FIG. 2 is a flowchart illustrating the operation flow of the integrated authentication system according to the first embodiment of the present invention;
FIG. 3 is a diagram showing an integrated authentication system according to a second embodiment of the present invention; and
FIG. 4 is a flowchart illustrating the operation flow of the integrated authentication system according to the second embodiment of the present invention.

### Mode for Invention

Specific structural and functional descriptions of embodiments based on the concepts of the present invention disclosed herein have been merely illustrated to describe the embodiments of the present invention based on the concepts of the present invention. The embodiments of the present invention based on the concepts of the present invention may be practiced in various forms and are not limited to the embodiments described herein.

The embodiments of the present invention based on the concepts of the present invention may be modified in various manners and may have various shapes, and thus specific embodiments are illustrated in the drawings and are described in detail in this specification. However, this is not intended to limit the present invention to specific disclosures, and includes all changes, equivalents, and substitutions falling within the spirit and technical scope of the present invention.

Terms, such as first and second, may be used to describe a variety of components, but the components should not be limited by these terms. The terms are used merely to distinguish one component from another component. For example, a first component may be named a second component, and, likewise, a second component may be named a first component.

When one component is described as being "connected" or "coupled" with another component, the one component may be directly connected or coupled with the other component, but it should be understood that a third component may be interposed between the two components. In contrast, when one component is described as being "directly connected" or "directly coupled" with another component, it should be understood that a third component is not present between the two components. The same principle should be applied to other expressions, i.e., "between ∼" and "immediately between ∼," "adjacent to ∼" and "neighboring ∼," or the like, which describe relationships between components.

The terms used herein are used merely to describe specific embodiments, but are not intended to limit the present invention. A singular expression should be understood to include a plural expression, unless clearly expressed otherwise in the context. Terms, such as "include" or "have", should be understood to indicate the presence of one or more features, numbers, steps, operations, components, parts, or combinations thereof, but should not be understood to exclude the presence or possible addition of one or more other features, numbers, steps, operations, components, parts, or combination thereof.

All the terms used herein, including technical or scientific terms, have the same meanings as those typically understood by those having ordinary skill in the art to which the present invention pertains, unless otherwise defined. Terms, such as ones defined in commonly used dictionaries, should be construed as having the same meanings as terms in the context of related technology and should not be constructed as having ideal or excessively formal meanings, unless clearly defined therein.

Preferred embodiments of the present invention will be described in detail below with reference to the accompanying drawings.

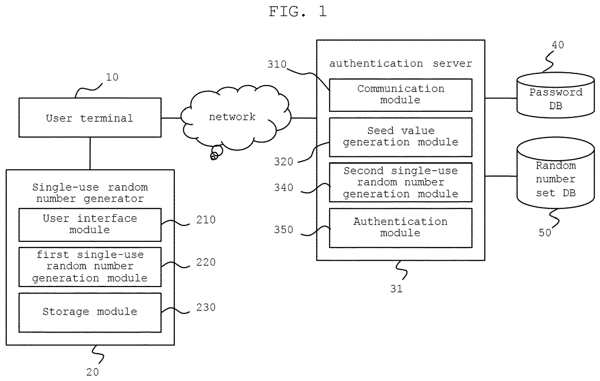

FIG. 1 is a diagram showing an integrated authentication system according to a first embodiment of the present invention.

Referring to FIG. 1, the integrated authentication system according to the first embodiment of the present invention includes a user terminal 10, a single-use random number generator 20, an authentication server 31, a password DB 40, and a random number set DB 50. Although they will be described in related portions below, a first random number set and a second random number set are the same, a first operation rule and a second operation rule are the same, a first intermediate value and a second intermediate value are the same, a first extraction rule and a second extraction rule are the same, first location numbers and second location numbers are the same, a first transformation rule and a second transformation rule are the same, and a first hash function and a second hash function are the same. Furthermore, according to the present embodiment, a user is normally authenticated only when a first single-use random number and a second single-use random number match each other.

The user terminal 10 is a device by which the user performs a transaction over a communication network. During the process of performing a transaction, the user terminal 10 performs functions, including the function of requesting authentication from the authentication server 31, the function of receiving a seed value from the authentication server 31 and then displaying the seed value, the function of receiving a first single-use random number, generated and displayed by the single-use random number generator 20, from the user and then transmitting the first single-use random number to the authentication server 31, etc. The user terminal 10 may include not only a general personal computer and a notebook but also a mobile terminal having predetermined computation and communication functions, such as a smartphone or the like.

The single-use random number generator 20 performs the function of generating a first single-use random number and then displaying the first single-use random number to the user.

For example, the single-use random number generator 20 may be configured to include a user interface module 210, a first single-use random number generation module 220, and a storage module 230.

The user interface module 210 performs the function of supporting the information input of the user and displaying a first single-use random number, generated by the first single-use random number generation module 220, to the user.

The first single-use random number generation module 220 performs the function of extracting the random numbers of locations corresponding to the seed value, generated by the authentication server 31, and a user password from random numbers constituting a first random number set stored in the storage module 230 by using the seed value and the user password as location information, generating a first single-use random number, and then displaying the first single-use random number to the user. The seed value is generated by the authentication server 31, is transmitted to and displayed by the user terminal 10, and is input to the single-use random number generator 20 by the user through the user interface module 210. In this case, the user password is information memorized by the user.

The storage module 230 stores a first random number set, i.e., a parent set for the generation of a first single-use random number, and does not store other pieces of user-related information, for example, a user password. The first random number set is information uniquely generated for and allocated to each user, and the second random number set, i.e., information which matches the first random number set, is stored in the random number set DB 50 accessible to the authentication server 31.

The authentication server 31 performs the function of extracting the random numbers of locations corresponding to a seed value and a user password stored in the password DB 40 from random numbers constituting a second random number set stored in the random number set DB 50 by using the seed value and the user password stored in the password DB 40 as location information, generating a second single-use random number, and then authenticating the user based on whether the second single-use random number matches the first single-use random number received from the user terminal 10.

For example, the authentication server 31 may be configured to include a communication module 310, a seed value generation module 320, a second single-use random number generation module 340, and an authentication module 350.

The communication module 310 performs the function of supporting communication with external devices including the user terminal.

The seed value generation module 320 performs the function of generating the seed value for the generation of the first single-use random number and the second single-use random number.

The second single-use random number generation module 340 performs the function of extracting the random numbers of the locations corresponding to the seed value and the user password stored in the password DB 40 from the random numbers constituting the second random number set stored in the random number set DB 50 by using the seed value and the user password stored in the password DB 40 as location information and then generating the second single-use random number.

The authentication module 350 performs the function of authenticating the user based on whether the second single-use random number generated by the second single-use random number generation module 340 matches the first single-use random number received from the user terminal 10.

In the password DB 40, user passwords set by users are stored in association with the IDs of the users.

In the random number set DB 50, the second random number set, i.e., a parent set for the generation of a second single-use random number, is stored. The second random number set is information uniquely generated for and allocated to each user, and is information matching the first random number set. In the random number set DB 50, second random number sets allocated to the users are stored in association with the IDs of the users.

In this system environment, in order to prevent a third party from pretending to be a user, i.e., in order to prevent a third party from being falsely authenticated, even when the user terminal 10 or authentication server 31 is hacked into by the third party, 1) it is required that the third party be precluded from reusing a password by dynamically changing the password upon each request for authentication, 2) it is required that the third party be prevented from predicting the password in advance, and 3) it is required that the authentication server 31 become aware of a single-use random number dynamically changed and generated by the single-use random number generator 20, so that it is required that the authentication server 31 can also generate a single-use random number which matches the single-use random number generated by the single-use random number generator 20.

For this purpose, the single-use random number generator 20 stores a series of random numbers and a method (algorithm) of extracting a predetermined number of random numbers from the numbers. The random numbers stored in the single-use random number generator 20 are referred to as a first random number set, and the algorithm by which the single-use random number generator 20 extracts the predetermined number of random numbers from the first random number set is referred to as a first algorithm. The single-use random number generator 20 may be implemented as a hardware device separately possessed by a user, or may be implemented in the user terminal 10 in a software form.

Furthermore, the authentication server 31 also stores random numbers and a method (algorithm) of extracting a predetermined number of random numbers from the random numbers, which can generate the same single-use random number as the single-use random number generator 20 present on a user side. The random numbers stored in the authentication server 31 are referred to as a second random number set, and the algorithm by which the authentication server 31 extracts the predetermined number of random numbers from the second random number set is referred to as a second algorithm.

Since it is required that the authentication server 31 and the single-use random number generator 20 generate the same single-use random numbers, the first random number set and the second random number set are the same, and the first algorithm and the second algorithm are the same. In the random number set DB 50, all random number sets for respective users are stored. The authentication server 31 which has identified the user via the ID of the user uses the second random number set which is a random number set allocated to the user.

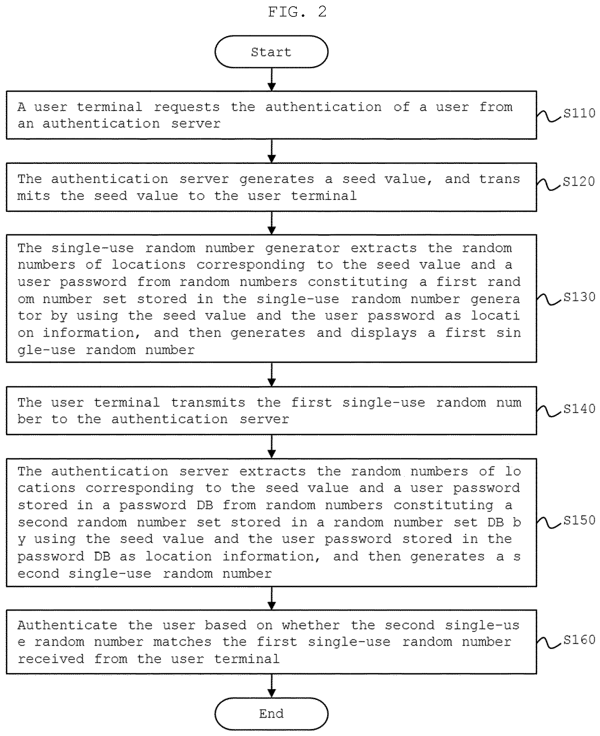

FIG. 2 is a flowchart illustrating the operation flow of the integrated authentication system according to the first embodiment of the present invention.

Further referring to FIG. 2, at step S110, there is performed a process in which the user terminal 10 requests the authentication of a user from the authentication server 31. For example, the process may be performed using a method in which the user who desires to receive a specific service, provided by the authentication server 31, via the user terminal 10 requests user authentication by inputting an ID to the user terminal 10 possessed by him or her and the authentication server 31 receives the request for authentication.

At step S120, there is performed a process in which the authentication server 31 which has received the request for user authentication from the user terminal 10 generates a seed value and transmits the seed value to the user terminal 10. For example, the seed value generated by the authentication server 31 may be random numbers, and these numbers may be generated via a pseudo-random number generator.

At step S130, there is perform a process in which the single-use random number generator 20 extracts the random numbers of locations corresponding to the seed value received by the user terminal 10 and a user password input by the user from random numbers constituting a first random number set stored in the single-use random number generator 20 by using the seed value and the user password as location information and then generates and displays a first single-use random number.

As an example, in the case where the single-use random number generator 20 is a hardware device physically separated from the user terminal 10, step S130 may be configured such that when the user inputs a user password memorized by him or her and the seed value received from the authentication server 31 by the user terminal 10 and displayed by the user terminal 10 to the single-use random number generator 20, the single-use random number generator 20 generates a first single-use random number corresponding to the seed value and the user password from random numbers constituting a first random number set by using the seed value and the user password as location information.

As another example, when the single-use random number generator 20 is implemented in the user terminal 10 in a software form, step S130 may be configured such that the user terminal 10 receives a seed value from the authentication server 31 and displays the seed value and, when the seed value and a user password are input via an interface screen provided by the single-use random number generator 20, i.e., a single-use random number generation application implemented in the user terminal 10, the single-use random number generator 20 generates a first single-use random number corresponding to the seed value and the user password from random numbers constituting a first random number set by using the seed value and the user password as location information and then displays the first single-use random number.

At step S140, there is performed a process in which the user terminal 10 transmits the first single-use random number to the authentication server 31. The first single-use random number is generated and displayed by the single-use random number generator 20. A configuration may be made such that when the user inputs the first single-use random number to the user terminal 10, the user terminal 10 transmits the first single-use random number to the authentication server 31.

At step S150, there is performed a process in which the authentication server 31 extracts the random numbers of locations corresponding to the seed value and the user password stored in the password DB 40 from random numbers constituting a second random number set stored in the random number set DB 50 by using the seed value and the user password stored in the password DB 40 as location information and then generates a second single-use random number.

At step S160, there is performed a process in which the authentication server 31 authenticates the user based on whether the second single-use random number generated by the authentication server 31 matches the first single-use random number received from the user terminal 10.

In the following, there are described examples of a specific method in which according to the first embodiment of the present invention, the single-use random number generator 20 generates a first single-use random number and the authentication server 31 generates a second single-use random number in response to it.

As an example, the single-use random number generator 20 may generate a first single-use random number by generating a first intermediate value through the application of a first operation rule to a seed value generated by the authentication server 31 and a user password input by the user, extracting first location numbers through the application of a first extraction rule to the first intermediate value, and then extracting random numbers corresponding to the first location numbers from random numbers constituting a first random number set. For example, the first operation rule may be one of various operation methods, such as addition, subtraction, etc., and the first extraction rule may be one of various methods for extracting first location numbers from a first intermediate value. Furthermore, the authentication server 31 may generate a second single-use random number by generating a second intermediate value through the application of a second operation rule to a seed value generated by the authentication server 31 itself and a user password stored in the password DB 40, extracting second location numbers through the application of a second extraction rule to the second intermediate value, and then extracting random numbers corresponding to the second location numbers from random numbers constituting a second random number set. The second operation rule is the same as the first operation rule, and the second extraction rule is the same as the first extraction rule. In this example, the single-use random number generator 20 and the authentication server 31 may be configured to generate a first single-use random number and a second single-use random number, respectively, by additionally using transaction information including part or all of transfer amount information, recipient identification information, and transaction time information. For example, in the case of a remittance transaction, the recipient identification information may be recipient account information. In the case of a shopping mall payment transaction, the recipient identification information may be shopping mall business registration number information.

Furthermore, for example, the single-use random number generator 20 and the authentication server 31 may be configured to generate a first single-use random number and a second single-use random number, respectively, by additionally using the bio-information of the user.

As another example, the single-use random number generator 20 may generate a first single-use random number by extracting the random numbers of locations corresponding to a seed value generated by the authentication server 31 and a user password input by a user from random numbers constituting a first random number set and then applying a first transformation rule to the extracted random numbers. Furthermore, the authentication server 31 may generate a second single-use random number by extracting the random numbers of locations corresponding to the seed value and a user password stored in the password DB 40 from random numbers constituting a second random number set and then applying a second transformation rule to the extracted random numbers. The first transformation rule and the second transformation rule are the same. For example, when the extracted random numbers are "114101," part of the number "229202" obtained by multiplying "114101" by 2 or part (for example, 057289) of the number "5.0572894506634274641656910578661" obtained by taking the log of "114101" may be used as the first and second single-use random numbers. In this example, the single-use random number generator 20 and the authentication server 31 may be configured to generate the first single-use random number and the second single-use random number, respectively, by additionally using transaction information including part or all of transfer amount information, recipient identification information, and transaction time information. Furthermore, for example, the single-use random number generator 20 and the authentication server 31 may be configured to generate the first single-use random number and the second single-use random number, respectively, by additionally using the bio-information of the user.

As still another example, in order to enhance security, the first single-use random number and the second single-use random number may be encrypted. For this purpose, the single-use random number generator 20 may generate a first single-use random number by extracting the random numbers of locations corresponding to a seed value generated by the authentication server 31 and a user password input by a user from random numbers constituting a first random number set and encrypting the extracted random numbers with a first hash function, and may add user information to the extracted random numbers and then encrypt the resulting information. Furthermore, the authentication server 31 may generate a second single-use random number by extracting the random numbers of locations corresponding to a seed value generated by the authentication server 31 itself and a user password stored in the generated password DB 40 from random numbers constituting a second random number set and encrypting the extracted random numbers with a second hash function, and may add user information to the extracted random numbers and then encrypt the resulting information. The first hash function and the second hash function are the same.

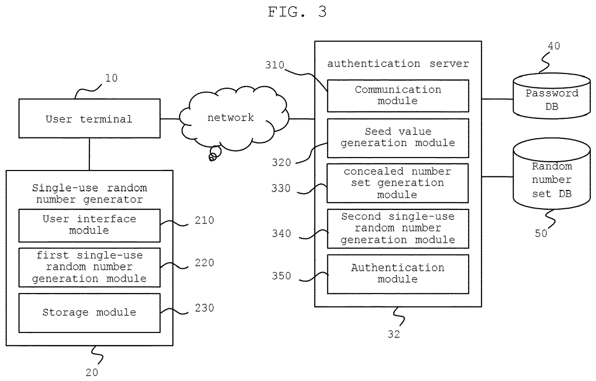

FIG. 3 is a diagram showing an integrated authentication system according to a second embodiment of the present invention. In the following, descriptions will be given with a focus on the parts of the second embodiment which are characteristic when compared with the first embodiment, and it will be noted that the various examples of the first embodiment may be also applied to the second embodiment.

Referring to FIG. 3, the integrated authentication system according to the second embodiment of the present invention includes a user terminal 10, a single-use random number generator 20, an authentication server 32, a password DB 40, and a random number set DB 50. The second embodiment is different from the first embodiment in that this authentication server 32 further includes a concealed number set generation module 330.

The concealed number set generation module 330 performs the function of generating a concealed number set including a seed value.

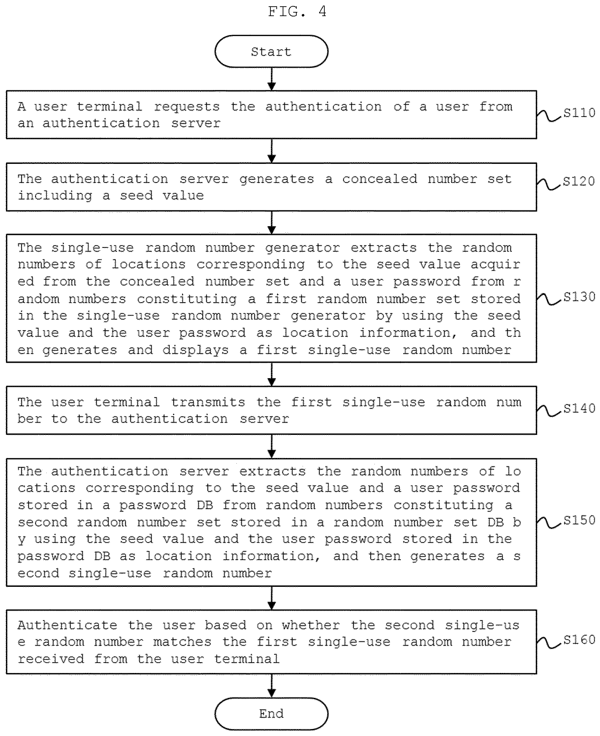

FIG. 4 is a flowchart illustrating the operation flow of the integrated authentication system according to the second embodiment of the present invention.

Further referring to FIG. 4, at step S210, there is performed a process in which the user terminal 10 requests the authentication of a user from the authentication server 32.

At step S220, there is performed a process in which the authentication server 32 which has received the request for the authentication of the user from the user terminal 10 generates a concealed number set including a seed value and transmits the concealed number set including the seed value to the user terminal 10. When the seed value is transmitted in the state of being included in the concealed number set, it may be impossible for a third party to become aware of the seed value, and thus security is enhanced.

At step S230, there is performed a process in which single-use random number generator 20 extracts the random numbers of locations corresponding to the seed value acquired from the concealed number set received by the user terminal 10 and a user password input by the user from random numbers constituting a first random number set stored in the single-use random number generator 20 by using the seed value and the user password input by the user as location information and then generates and displays a first single-use random number. For example, step S230 may be configured to extract numbers corresponding to seed extraction location numbers already allocated to the user and then acquire a seed value. As a specific example, when promised location values, i.e., seed extraction location numbers, are "7," "9," "5," and "6" and a concealed number set transmitted by the authentication server 32 to the user terminal 10 is "3701235468," a seed value is "5623," consisting of the number "5" located at a 7-th sequential position, the number "6" location at a 9-th sequential position, the number "2" located at a 5-th sequential position, and the number "3" located at a 6-th sequential position.

At step S240, there is performed a process in which the user terminal 10 transmits the first single-use random number to the authentication server 32. The first single-use random number is generated by the single-use random number generator 20, and is then displayed. A configuration may be made such that when the user inputs a first single-use random number to the user terminal 10, the user terminal 10 transmits the first single-use random number to the authentication server 32.

At step S250, there is performed a process in which the authentication server 32 extracts the random numbers of locations corresponding to the seed value and a user password stored in the password DB 40 from random numbers constituting a second random number set stored in the random number set DB 50 by using the seed value and the user password stored in the password DB 40 as location information and then generates a second single-use random number.

At step S260, there is performed a process in which the authentication server 32 authenticates the user based on whether the second single-use random number generated by the authentication server 32 matches the first single-use random number received from the user terminal 10.

As described above, the various examples applied to the first embodiment may be also applied to the second embodiment. For example, the examples of the specific method in which the single-use random number generator 20 generates a first single-use random number and the authentication server 31 generates a second single-use random number in response to it, which are applied to the first embodiment, may be also applied to the second embodiment.

As described in detail above, according to the present invention, a transaction password can be prevented from being divulged even when the user terminal or server is hacked into by a third party without legitimate rights, so that an effect is achieved in that the security of user authentication is considerably improved.

Furthermore, a third party is precluded from reusing a transaction password by dynamically changing the transaction password upon each request for user authentication and the third party is prevented from predicting the transaction password in advance, so that an effect is achieved in that the security of user authentication is considerably enhanced.

Furthermore, a transaction password is not generated before a user accesses the server, so that effects are achieved in that even a server operator cannot steal a transaction password and internal control cost is reduced in terms of a server operator.

Furthermore, according to the present invention, a user uses a single-use random number generated by the single-use random number generator as a transaction password in order to obtain authentication, so that an effect is achieved in that the transaction password cannot be stolen even when a third party without legitimate rights tabs on a line or hacks.

Furthermore, even when a third party without legitimate rights acquires and uses the single-use random number generator, the third party cannot become aware of a user password, and thus the single-use random number generator acquired by the third party cannot generate a random number matching a random number generated by the authentication server, so that an effect is achieved in that a transaction password is not stolen even when the single-use random number generator is lost.

Furthermore, a user password and a second random number set corresponding to a user private key are not stored in the authentication server, but are separately stored in the password DB and the random number set DB, respectively, so that an effect is achieved in that a transaction password is not stolen even when the authentication server is hacked into.

Furthermore, a random number generated by the single-use random number generator includes transaction information including part or all of transfer amount information, recipient identification information, and transaction time information, so that a non-repudiation effect is achieved. In other words, an authentication server (a financial institution, or the like) which has transmitted a seed value cannot repudiate the performance of a transaction, and a user who has transmitted a number, obtained by inputting the seed value and his or her user password, to the authentication server cannot repudiate the performance of the acts. Furthermore, a random number generated by the single-use random number generator includes recipient identification information, so that an effect is achieved in that the authentication of a hacker is rejected due to different pieces of recipient identification information even when the hacker illegitimately intercepts the single-use random number generator and asks for a transfer to the number of his or her illegitimate account.

Furthermore, a user password is required to use the single-use random number generator, the user password is stored only in the memory (brain) of a user and is not present anywhere else, and thus a third party has no method of stealing the user password, so that the single-use random number generator can effectively replace an accredited certificate.

Moreover, in a specific transaction, the present invention can authenticate whether a trader is a legitimate user and can be also used for the purpose of identification capable of generally identifying a user, so that an effect is achieved in that the integrated authentication of a user becomes possible.

### [Description of reference symbols]

10: user terminal
20: single-use random number generator
31, 32: authentication server
40: password DB
50: random number set DB
210: user interface module
220: first single-use random number generation module
230: storage module
310: communication module
320: seed value generation module
330: concealed number set generation module
340: second single-use random number generation module
350: authentication module

## Claims

1. An integrated authentication system comprising a user terminal, an authentication server, and a single-use random number generator, wherein:
the authentication server which has received a request for authentication of a user from the user terminal generates a seed value, and transmits the seed value to the user terminal;
the single-use random number generator extracts random numbers of locations corresponding to the seed value received by the user terminal and a user password from random numbers constituting a first random number set stored in the single-use random number generator by using the seed value and the user password as location information, and then generates and displays a first single-use random number;
the authentication server extracts random numbers of locations corresponding to the seed value and a user password stored in a password database (DB) from random numbers constituting a second random number set stored in a random number set DB by using the seed value and the user password stored in the password DB as location information, generates a second single-use random number, and then authenticates the user based on whether the second single-use random number matches the first single-use random number received from the user terminal;
the single-use random number generator does not store the user password; and
the first random number set and the second random number set identical to the first random number set are information uniquely generated for and allocated to each user, and the seed value is a random number generated via a pseudo-random number generator.

2. An integrated authentication system comprising a user terminal, an authentication server, and a single-use random number generator, wherein:
the authentication server which has received a request for authentication of a user from the user terminal generates a concealed number set including a seed value, and transmits the concealed number set including the seed value to the user terminal;
the single-use random number generator extracts random numbers of locations corresponding to the seed value acquired from the concealed number set and a user password from random numbers constituting a first random number set stored in the single-use random number generator by using the seed value and the user password as location information, and then generates and displays a first single-use random number;
the authentication server extracts random numbers of locations corresponding to the seed value and a user password stored in a password database (DB) from random numbers constituting a second random number set stored in a random number set DB by using the seed value and the user password stored in the password DB as location information, generates a second single-use random number, and then authenticates the user based on whether the second single-use random number matches the first single-use random number received from the user terminal;
the single-use random number generator does not store the user password; and
the first random number set and the second random number set identical to the first random number set are information uniquely generated for and allocated to each user, and the seed value is a random number generated via a pseudo-random number generator.

3. The integrated authentication system of claim 2, wherein the seed value is acquired by extracting numbers corresponding to seed extraction location numbers already allocated to the user from numbers constituting the concealed number set.

4. The integrated authentication system of claim 1 or 2, wherein:
the single-use random number generator generates the first single-use random number by generating a first intermediate value through application of a first operation rule to the seed value and the user password, extracting first location numbers through application of a first extraction rule to the first intermediate value, and then extracting random numbers corresponding to the first location numbers from the random numbers constituting the first random number set; and
the authentication server generates the second single-use random number by generating a second intermediate value through application of a second operation rule to the seed value and the user password stored in the password DB, extracting second location numbers through application of a second extraction rule to the second intermediate value, and then extracting random numbers corresponding to the second location numbers from the random numbers constituting the second random number set.

5. The integrated authentication system of claim 4, wherein the single-use random number generator and the authentication server generate the first single-use random number and the second single-use random number, respectively, by additionally using transaction information including part or all of transfer amount information, recipient identification information, and transaction time information.

6. The integrated authentication system of claim 4, wherein the single-use random number generator and the authentication server generate the first single-use random number and the second single-use random number, respectively, by additionally using bio-information of the user.

7. The integrated authentication system of claim 1 or 2, wherein:
the single-use random number generator generates the first single-use random number by extracting random numbers of locations corresponding to the seed value and the user password from the random numbers constituting the first random number set and then applying the first transformation rule to the extracted random numbers; and
the authentication server generates the second single-use random number by extracting random numbers of locations corresponding to the seed value and the user password stored in the password DB from the random numbers constituting the second random number set and then applying a second transformation rule to the extracted random numbers.

8. The integrated authentication system of claim 7, wherein the single-use random number generator and the authentication server generate the first single-use random number and the second single-use random number, respectively, by additionally using transaction information including part or all of transfer amount information, recipient identification information, and transaction time information.

9. The integrated authentication system of claim 7, wherein the single-use random number generator and the authentication server generate the first single-use random number and the second single-use random number, respectively, by additionally using bio-information of the user.

10. The integrated authentication system of claim 1 or 2, wherein:
the single-use random number generator generates the first single-use random number by extracting random numbers of locations corresponding to the seed value and the user password from the random numbers constituting the first random number set and then encrypting the extracted random numbers with a first hash function; and
the authentication server generates the second single-use random number by extracting random numbers of locations corresponding to the seed value and the user password stored in the password DB from the random numbers constituting the second random number set and encrypting the extracted random numbers with a second hash function.

11. The integrated authentication system of claim 1 or 2, wherein the single-use random number generator is a hardware device physically separated from the user terminal or a function module implemented in the user terminal in a software form.
